# EUROPÄISCHE PATENTSCHRIFT

(11) **EP 0 438 713 B1**
(45) Veröffentlichungstag und Bekanntmachung des Hinweises auf die Patenterteilung: **08.03.1995**
(21) Anmeldenummer: 90124168.7
(22) Anmeldetag: 14.12.1990
(51) Int. Cl.: C12G 1/00, C12H 1/04

(54) **Verfahren zur Entfernung von Schwermetallionen aus Wein und weinähnlichen Getränken**
Method for removing heavy metal ions from wine and related drinks
Procédé d'élimination d'ions de métaux lourds du vin et boissons similaires

(30) Priorität: 16.01.1990 DE 4000978
(43) Veröffentlichungstag der Anmeldung: 31.07.1991
(73) Patentinhaber: BASF Aktiengesellschaft, 67063 Ludwigshafen (DE)
(72) Erfinder: Detering, Jürgen, Dr., W-6800 Mannheim 1 (DE); Sanner, Axel, Dr., W-6710 Frankenthal (DE); Fussnegger, Berhard, Dr., W-6731 Kirrweiler (DE)

(56) Entgegenhaltungen:
- EP-A- 88 964
- EP-A- 226 874
- US-A- 3 878 310
- SOUTH AFRICAN JOURNAL FOR ENOLOGY & VITICULTURE, Band 7, Nr. 1, 1986, ZA; G.J. LOUBSER et al., Seiten 47-51#

## Beschreibung

Die Erfindung betrifft den Einsatz eines Polymerisates auf Basis eines basischen Vinylheterocyclus mit einem pKₐ-Wert von mindestens 3,8 zur Entfernung von Schwermetallionen aus Wein und weinähnlichen Getränken.

### Einleitung

Im Wein und in weinähnlichen Getränken, also Weinen aus Stein-, Kern- und Beerenobst, enthaltene Schwermetallkationen (insbesondere von Eisen, Kupfer, Zink, Zinn, Mangan und Cadmium) beeinflussen in zu hoher Konzentration die sensorische Qualität und die Stabilität dieser Getränke in abträglicher Art und Weise. Sie können einen metallischen Geschmack verursachen, für unerwünschte Farbveränderungen verantwortlich sein oder hartnäckige Schleier und Trübungen bewirken. Bei der Weiterverarbeitung von Jungweinen zu Schaumweinen ist ein zu hoher Schwermetallgehalt häufig die Ursache unerfreulicher Gärverzögerungen. Einige der Metalle sind auch aus toxikologischen Gründen als bedenklich einzustufen. Daher ist man bestrebt, den Schwermetallgehalt in diesen Getränken, insbesondere im Wein, zu reduzieren.

Die durch Schwermetalle im Wein hervorgerufenen Trübungserscheinungen stellen aus kellertechnologischer Sicht ein gravierendes Problem dar. Die meisten Trübungen beruhen auf einem zu hohen Eisengehalt im Wein. So kennt man die Eisen-Phosphat-Trübung (grauer o. weißer Bruch) und die Eisen-Gerbstoff-Trübungen (schwarzer Bruch). Eiweißstoffe sind teilweise auch an diesen Trübungen beteiligt. Die Kupfertrübung beruht auf der Bildung von unlöslichem Kupfersulfid. Kellertechnisch liegt für Eisen der schönungsfreie Grenzwert bei 4 ppm, für Kupfer bei 0,5 ppm.

Eisen wird nur in relativ kleinen Mengen über die Rebwurzel aufgenommen. Als wichtigste Quelle sind die Kellergeräte (Korrosion) zu nennen. Ein geringer Teil des Eisens kann auch aus Schönungsmitteln wie Bentonit oder Aktivkohle stammen. Ein zu hoher Kupfergehalt resultiert vornehmlich aus der Kupfersulfatschönung und aus kupferhaltigen Spritzmitteln, in geringerem Umfang auch aus anderen Schönungsmitteln.

Stand der Technik
a) Verfahren, die technische Anwendung finden, aber der Erfindung fern stehen:
   Die Behandlung des Weins mit Kaliumhexacyanoferrat (II) ist als Blauschönung bekannt. Sie wird vor allem eingesetzt, um die für die Trubbildung verantwortlichen Fe-Ionen durch Fällung als schwerlösliches Berliner Blau aus dem Wein zu entfernen. Andere Schwermetallionen (Cu-, Zn-, Mn- u. Cd-Ionen) werden ebenfalls mitgefällt. Die Blauschönung ist zur Zeit das mit Abstand am meisten angewendete Verfahren zur Reduzierung der Schwermetallionenkonzentration. Sie besitzt allerdings aus kellertechnologischer und vor allem aus toxikologischer Sicht einige schwerwiegende Nachteile. So muß der Schönungsbedarf durch Voruntersuchungen genau festgelegt werden, da aus einer zu hohen Dosierung an Kaliumhexacyanoferrat (II) (überschönung) die Bildung von Blausäure resultiert. Eine Unterschönung bei zu niedriger Dosierung kann jedoch zu Trubbildungen führen. Eine Nachuntersuchung ist dringend angeraten, um Überschönungen frühzeitig festzustellen. Der Blautrub neigt weiterhin dazu, kolloidal gelöst im Wein zu verbleiben, so daß z.B. eine Nachschönung mit Kieselsol-Gelatine erforderlich ist. Kolloidal gelöster Blautrub zeigt ein langsames Agglomerations- u. Sedimentationsverhalten. Das hat lange Verweilzeiten zur Folge mit der Gefahr der allmählichen Blautrubzersetzung unter Bildung von Blausäure. Die mit Kaliumhexacyanoferrat (II) bzw. mit dem Blautrub in Kontakt gekommenen Kellergeräte müssen gründlichst mit Sodalösung behandelt werden, um überschüssiges Reagens oder anhaftenden Blautrub zu zersetzen. Weiterhin gilt der cyanidhaltige Blautrub als Sondermüll und muß entsprechend entsorgt werden.
   Fessler's Compound ist ein Schönungsmittel, das insbesondere in den USA zur Reduzierung des Gehalts an Schwermetallionen im Wein eingesetzt wird. Dieses Präparat besteht aus einem Gemisch verschiedener eisenhaltiger Hexacyanoferrate mit einem wechselnden Gehalt an Kaliumhexacyanoferrat (II) zusammen mit Kaliumsulfat und Wasser in Pastenform. Kaliumhexacyanoferrat (II) ist hier die wirksame Komponente. Diese Schönungsart besitzt die selben Nachteile wie die Blauschönung. Außerdem wird der Kaliumgehalt des Weins beachtlich erhöht, was zu verstärkter Weinsteinbildung führt.
   Für Rotwein ist anstelle der Blauschönung auch eine Behandlung mit Calciumphytat zugelassen. Calciumphytat entfernt allerdings nur dreiwertiges Eisen. Der Gehalt an Cu-, Zn- und zweiwertigen Fe-Ionen wird nicht reduziert. Diese unzureichende Reduktion der Metallionenkonzentration ist für die begrenzte Wirksamkeit der Calciumphytat-Schönungsmethode verantwortlich. Ein weiterer Nachteil ist, daß die Ausfällung von Eisen nur sehr langsam erfolgt. Es sind deshalb lange Verweilzeiten notwendig. Bei zu kurzen Verweilzeiten und unzureichender Belüftung können Trübungen auftreten.
b) Nächstliegender Stand der Technik, der jedoch bisher aufgrund gravierender Nachteile bei der Herstellung und unzureichender Produkteigenschaften keine praktische Anwendung fand:
   Die DE-A-19 45 749 beschreibt ein Verfahren zum Entfernen von Phenolen und/oder Metallen aus einem wäßrigen Medium (u.a. aus Getränken) mittels eines polymeren Sorbens, das basische oder kationische Gruppen enthält. Die Anwendungsbeispiele beziehen sich auf die Verwendung von Copolymeren aus Maleinsäureanhydrid und α-Olefinen wie Ethylen, Propylen oder Isobutylen oder auf Copolymere ähnlichen Typs. Diese Copolymere werden mit einem Diamin vernetzt und anschließend in einer polymeranalogen Reaktion mit Dimethylaminopropylamin modifiziert. Es handelt sich hier um einen mehrstufigen Prozeß mit erheblichem präparativen Aufwand. Gearbeitet wird in einem hochsiedenden aromatischen Lösungsmittel (Xylol). Zur Entfernung von Verunreinigungen und dem Produkt anhaftendem Xylol wird der Feststoff mit einer erheblichen Menge Hexan gewaschen. Die organischen Lösungsmittel müssen entsorgt werden.
   Die getränkespezifische Anwendung der beschriebenen Sorptionsmittel beschränkt sich auf ihren Einsatz zur Entfernung sehr geringer Mengen Eisen und Kupfer aus Bier (Fe-Gehalt: 0,26 ppm, Cu-Gehalt: 0,06 ppm). An die Sorptionskapazität werden also keine hohen Anforderungen gestellt. Behandlungsbedürftiger Wein (Fe-Gehalt ≦ 60 ppm, Cu-Gehalt ≦ 10 ppm) bedarf jedoch eines effizienteren Sorptionsmittels mit hoher Aufnahmekapazität.
   In diesem Patent wird unter vielem anderen auch N-Vinylimidazol (NVI) als einsetzbares Comonomer erwähnt. Allerdings wird weder die Copolymerisation von NVI noch die Anwendung der resultierenden Polymere in einem Beispiel beschrieben. Offensichtlich haben die Patentinhaber eine praktische Umsetzung nicht oder nicht erfolgreich versucht.

Literatur über die erfindungsgemäß verwendbaren Sorptionsmittel:
Die EP-A-88964 beschreibt ein Verfahren zur Herstellung von unlöslichen, in Wasser nur wenig quellbaren, körnigen Polymerisaten eines basischen N-Vinylheterocyclus (z.B. N-Vinylimidazol) und dessen Copolymerisaten mit bis zu 30 Gew.-% copolymerisierbarer Monomerer. Die Bindung von übergangsmetallkationen zur Darstellung von Katalysatoren stellt eine Anwendungsform der beschriebenen Polymerisate dar. Diese Polymerisate besitzen vor allem als Adsorberharze ein breites Anwendungsspektrum. Sie adsorbieren sehr gut Proteine, speziell Enzyme, und eignen sich ebenfalls zur adsorptiven Entfernung von störenden Polyphenolen und Farbstoffen aus wäßrigen Lösungen. Aufgrund ihrer Affinität zu Eiweißstoffen und Polyphenolen erschien der (dort nicht erwähnte) Einsatz der beanspruchten Polymerisate als Mittel zur selektiven Reduzierung der Schwermetallionenkonzentration in eiweißreichen und polyphenolhaltigen Getränken wenig erfolgversprechend.

Umso überraschender wurde jetzt gefunden, daß derartige Polymerisate sich hervorragend zur selektiven Entfernung von Schwermetallionen aus Wein und weinähnlichen Getränken (Ausgangs-Gesamtkonzentrationsbereich: 0,1-60 ppm) einsetzen lassen und damit einen dringenden Bedarf der Winzer und Kellereien zu decken geeignet sind.

### Erfindungsgegenstand

Die Erfindung besteht daher in einem Verfahren zur Entfernung von Schwermetallionen aus Wein und weinähnlichen Getränken, wobei man das Getränk pro 100 l mit 5 bis 250, vorzugsweise 10 bis 100 g eines Polymerisates behandelt, das 50 bis 99,5, vorzugsweise 60 bis 99 Gew.-% mindestens eines basischen Vinylheterocyclus mit einem pKₐ-Wert von mindestens 3,8 und 0 bis 49,5, vorzugsweise 0 bis 40 Gew.-% eines anderen unter den angewandten Polymerisationsbedingungen copolymerisierbaren Monomeren sowie 0,5 bis 10 Gew.-% eines Vernetzers einpolymerisiert enthält. Die Polymerisationsbedingungen sind: Ausschluß von Sauerstoff und von Polymerisationsinitiatoren; Gegenwart von 0,5 bis 10, vorzugsweise 1 bis 4 Gew.-%, bezogen auf das Gesamtmonomerengewicht, eines Vernetzers; Temperatur im Bereich von 30 bis 200, vorzugsweise 40 bis 100°C.

Unter basischen Vinylheterocyclen sind hier gesättigte und aromatisch ungesättigte Heterocyclen mit einer Vinylgruppe und mindestens einem basischen tertiären Ring-Stickstoffatom mit einem pKₐ von mindestens 3,8 zu verstehen. Außer der Vinylgruppe kann der Ring auch Alkylgruppen mit 1 bis 4 Kohlenstoffatomen, Phenyl-, Benzyl-Gruppen oder auch einen anellierten zweiten Ring tragen. Als Beispiele seien genannt: N-Vinylimidazol (NVI) sowie Derivate wie 2-Methyl-1-vinylimidazol, 4-Methyl-1-vinylimidazol, 5-Methyl-1-vinylimidazol, 2-Ethyl-1-vinylimidazol, 2-Propyl-1-vinylimidazol, 2-Isopropyl-1-vinylimidazol, 2-Phenyl-1-vinylimidazol, 1-Vinyl-4,5-benzimidazol. Weiterhin können beispielsweise eingesetzt werden: 2-Vinylpyridin, 4-Vinylpyridin sowie 2-Methyl-5-vinylpyridin. Selbstverständlich können auch Gemische von basischen Vinylheterocyclen untereinander eingesetzt werden.

Geeignete Vernetzer sind solche, die zwei oder mehr radikalisch copolymerisierbare Vinylgruppen im Molekül enthalten. Besonders geeignet sind Alkylenbisacrylamide wie Methylenbisacrylamid und N,N'-Bisacryloylethylendiamin, außerdem N,N' -Divinylethylenharnstoff, N,N'-Divinylpropylenharnstoff, Ethyliden-bis-3-(N-vinylpyrrolidon) sowie N,N'-Divinyldiimidazolyl-(2,2')- und 1,1'-Bis(3,3'-vinylbenzimidazolid-2-on)-1,4-butan. Andere brauchbare Vernetzungsmittel sind beispielsweise Alkylenglykoldi(meth)acrylate wie Ethylenglykoldi(meth)acrylat und Tetramethylenglykoldi(meth)acrylat, aromatische Divinylverbindungen wie Divinylbenzol und Divinyltoluol sowie Allylacrylat, Divinyldioxan, Pentaerythrit-triallylether und deren Gemische. Bei Polymerisation in Gegenwart von Wasser sind sie natürlich nur geeignet, soweit sie in der wäßrigen Monomermischung löslich sind.

Das gleiche gilt selbstverständlich für die Comonomeren, die in Mengen bis zu 49,5, vorzugsweise bis zu 40 Gew.-%, bezogen auf die gesamte Monomermischung, einpolymerisiert werden können. Als solche kommen beispielsweise in Betracht Styrol, Acrylester, Vinylester, Acrylamid, vorzugsweise N-Vinyllactame wie 3-Methyl-N-vinylpyrrolidon, insbesondere N-Vinylcaprolactam und N-Vinylpyrrolidon.

Zur Durchführung der Polymerisation ohne Lösungsmittel wird das Monomerengemisch, bestehend aus basischem Vinylheterocyclus, dem vernetzenden Agens und gegebenenfalls N-Vinyllactam oder einem anderen Comonomeren durch Einleiten von Stickstoff inertisiert und anschließend auf 100 bis 200, vorzugsweise 150 bis 180°C erhitzt. Vorteilhaft ist es, wenn in die Mischung weiter ein schwacher Stickstoffstrom eingeleitet wird. Besonders vorteilhaft ist es, wenn der Ansatz durch Anlegen von Vakuum zum Sieden gebracht wird. Je nach Art der eingesetzten Monomeren und der gewählten Temperatur polymerisiert dann die Mischung innerhalb 1 bis 20 Stunden. Beispielsweise bilden sich bei der Polymerisation von 2-Methyl-1-vinylimidazol mit 2 % N,N' -Divinylethylenharnstoff bei 150°C unter Rühren mit einem kräftigen Rührwerk und einem Druck von 310 mbar nach 2,5 h die ersten Polymerisatteilchen, die langsam zunehmen, bis nach 10 h der Ansatz aus einem bräunlichen Pulver besteht. Nach Auswaschen mit Wasser und Trocknen wird das neue Polymere in Ausbeuten von über 90 % in Form eines groben Pulvers erhalten.

Eine bevorzugte Herstellungsart ist die Fällungspolymerisation in Wasser. Die Konzentration der Monomeren im Reaktionsansatz wird zweckmäßigerweise so gewählt, daß der Ansatz über die gesamte Reaktionsdauer hinweg gut rührbar bleibt. Bei zu wenig Wasser werden die Polymerisatkörner nämlich klebrig, so daß ein Rühren schwieriger wird als ganz ohne Wasser. Bei den üblichen Rührkesseln liegt die zweckmäßige Monomerenkonzentration, bezogen auf die wäßrige Mischung, bei ca. 5 bis 30, vorzugsweise 8 bis 15 Gew.-%. Man kann sie bis auf 50 Gew.-% steigern, wenn kräftige Rührwerke zur Verfügung stehen. Es kann auch zweckmäßig sein, die Polymerisation mit einer relativ konzentrierten Lösung zu beginnen und dann im Verlauf der Reaktion mit Wasser zu verdünnen. Die Polymerisation wird zweckmäßigerweise bei pH-Werten über 6 durchgeführt, um eine eventuell mögliche Verseifung der Comonomeren und/oder Vernetzer zu vermeiden. Die Einstellung des pH-Wertes kann durch Zugabe geringer Mengen Basen wie Natriumhydroxid oder Ammoniak oder der üblichen Puffersalze wie Soda, Natriumhydrogencarbonat oder Natriumphosphat erfolgen. Der Ausschluß von Sauerstoff läßt sich dabei dadurch erreichen, daß der Polymerisationsansatz am Sieden gehalten wird, und/oder wie erwähnt mit Hilfe eines Inertgases wie Stickstoff. Die Polymerisationstempertur kann hier 30 bis 150°C betragen. Vorzugsweise arbeitet man bei 40 bis 100°C.

Bisweilen kann es von Vorteil sein, zur völligen Entfernung von gelöstem Sauerstoff vor oder zu Beginn der Polymerisation geringe Mengen - 0,01 bis 1 Gew.-%, bezogen auf die Monomermischung, - eines Reduktionsmittels wie Natriumsulfit, Natriumpyrosulfit, Natriumdithionit, Ascorbinsäure und dergleichen zuzusetzen.

Bei einer besonders bevorzugten Ausführungsform der Fällungspolymerisation wird das wasserlösliche Comonomere (vorzugsweise NVP oder ein N-Vinyllactam), ein Teil des Vernetzers, Wasser und gegebenenfalls ein Puffer und ein Reduktionsmittel in einem schwachen Stickstoffstrom erhitzt, bis sich die ersten Polymerisatteilchen zeigen. Dann wird eine vorher durch Einblasen von Stickstoff inertisierte Mischung aus dem Vinylheterocyclus und dem restlichen Vernetzer und gegebenenfalls Wasser als Verdünnungsmittel innerhalb 0,2 bis 6 Stunden zugegeben.

Häufig kann der Start der Polymerisation durch Zugabe von 0,01 bis 5 Gew.-%, bezogen auf die Monomermischung, eines vernetzten, wenig quellbaren Polymerisates auf Basis von basischen Vinylheterocyclen mit einem pKₐ-Wert von mindestens 3,8 oder Vinyllactamen, insbesondere N-Vinylimidazol und N-Vinylpyrrolidon, beschleunigt werden.

Die Isolierung des anfallenden Polymeren aus der wäßrigen Suspension kann durch Filtration oder Zentrifugieren mit anschließendem Auswaschen mit Wasser und Trocknen in üblichen Trocknern wie Umluft- oder Vakuumtrockenschrank, Schaufeltrockner oder Stromtrockner erfolgen.

Die erfindungsgemäßen Polymerisate vereinigen in sich den großen Vorteil ihrer einfachen Herstellbarkeit mit den besonderen und nichtvorhersehbaren Vorteilen, daß sie höchst selektiv und effektiv nur die Schwermetallionen binden, hingegen nicht andere Metallionen, wie Magnesium und Calcium, und auch nicht in störendem Maße phenolische oder eiweißartige Verbindungen oder andere Weininhaltsstoffe. Daher bleibt ihre Bindekapazität weitgehend für die störenden Schwermetallionen erhalten, so daß man das Polymerisat sehr sparsam einsetzen und trotzdem extrem geringe Schwermetallionenkonzentrationen bis in die Nähe der Nachweisbarkeitgrenze erzielen kann.

Die erfindungsgemäße Behandlung des Weins besteht darin, daß man diesen während mindestens einer Minute, vorzugsweise mindestens einer Stunde, mit dem Polymerisat in Kontakt bringt. Dies kann chargenweise durch Zusatz des Polymerisates zum Wein und Abtrennen oder kontinuierlich über eine mit dem Polymerisat gefüllte Säule erfolgen. Die Einsatzmenge der Polymerisate als Sorptionsmittel richtet sich nicht nur nach dem Schönungsbedarf, d.h. nach der Ausgangsmetallionenkonzentration und der gewünschten Endkonzentration, sondern auch nach der für den Schönungsprozeß zur Verfügung stehenden Zeit und liegt im Bereich von 5 bis 250, vorzugsweise 10 bis 100 g/100 l Wein. Wie die Anwendungsbeispiele zeigen, erfolgt schon nach relativ kurzen Kontaktzeiten eine deutliche Absenkung der Schwermetallionenkonzentration. Längere Verweilzeiten erhöhen die Wirksamkeit der erfindungsgemäß verwendbaren Polymerisate jedoch drastisch. Es ist vorteilhaft, den Einsatz der Sorptionsmittel als abschließende Schönungsmaßnahme vor der Flaschenfüllung durchzuführen. Natürlich ist auch ein Einsatz in einer früheren Stufe der Weinbereitung prinzipiell möglich.

Das Polymerisat-Pulver ist geschmack- und geruchneutral und sehr gut filtrierbar. Die sensorische Qualität des Weins wird bei einer Schönung mit diesen Polymerisaten nicht verändert. Der Wein behält sein ihm eigenes sortentypisches Aroma bei. Eine Regenerierung der Sorptionsmittel (Polymerisate) ist durch Behandlung mit verdünnten Säuren, vorzugsweise Mineralsäuren, problemlos möglich.

Obwohl die erfindungsgemäß verwendbaren Polymerisate unter Zusatz nur ganz geringer Vernetzermengen (vorzugsweise 1-4 %, bezogen auf das Gesamtgewicht der eingesetzten Monomere) hergestellt werden, sind sie in Wasser nur wenig quellbar. Sie bilden keine Gele. Im Unterschied dazu erhält man bei der Polymerisation der o.g. Monomere in wäßriger Lösung in Gegenwart eines Initiators und eines Vernetzers vernetzte Polymere vom Gel-Typ. Der Vernetzungsgrad und damit das Quellverhalten ist hier weitgehend abhängig von der Menge an zugegebenem Vernetzer. Um ein Polymerisat vom Gel-Typ herzustellen, das dasselbe Quellverhalten zeigt wie die erfindungsgemäß verwendbaren Polymerisate, benötigt man eine Vernetzermenge über 20 Gew.-%. Diese stark vernetzten Gele besitzen aufgrund ihrer Morphologie ein deutlich schlechteres Sorptionsvermögen gegenüber Schwermetallkationen als die erfindungsgemäß einsetzbaren porösen Polymerisate (siehe Bsp. 13). Polymerisate vom Gel-Typ mit einem Vernetzeranteil unter 5 % quellen sehr stark. Solche stark quellbaren Polymerisate haben bezüglich Herstellung, allgemeiner Handhabung und Anwendung schwerwiegende Nachteile: Sie verstopfen das Reaktionsgefäß, können weder gerührt noch ausgeschüttet werden, und die Trocknung erfordert das Verdampfen großer Lösungsmittelmengen. Sie müssen zum Gebrauch vorgequollen werden und sind in diesem Zustand nicht schüttfähig. Sie zeigen ein unbefriedigendes Anschwemmverhalten auf die Filterschicht und bilden keinen lockeren Filterkuchen. Sie sind damit im Gegensatz zu den erfindungsgemäß verwendbaren Polymerisaten nicht leicht filtrierbar. Weiterhin neigen Säulen, die mit den Polymerisaten vom Gel-Typ gefüllt sind, zum Verstopfen.

Die in den Beispielen verwendeten Teile und Prozente beziehen sich auf das Gewicht.

### Synthesebeispiele

### Beispiel 1

In einem Rührgefäß mit Rückflußkühler wurde ein Gemisch aus 50 Teilen N-Vinylimidazol, 30 Teilen 2-Methyl-1-vinylimidazol und 30 Teilen N-Vinylpyrrolidon unter Zusatz von 3 Teilen N,N'-Divinylethylenharnstoff bei 250 mbar auf 160°C erhitzt. Nach ca. 90 min traten die ersten unlöslichen Polymerisatpartikel auf. Nach weiteren 2 h Rühren bestand der Reaktionsansatz aus einem trockenen Pulver, das anschließend auf einer Nutsche gewaschen und im Umluftschrank bei 60°C getrocknet wurde. Die Ausbeute betrug 93,5 %.

### Beispiel 2

In einer Rührapparatur mit aufgesetztem Rückflußkühler wurde ein Gemisch aus 11,5 Teilen N-Vinylimidazol (NVI), 2,5 Teilen N-Vinylpyrrolidon (NVP), 0,3 Teilen N,N'-Divinylethylenharnstoff, 138 Teilen H₂O und 0,1 Teilen Natronlauge (5 %ig) vorgelegt und unter Zusatz von 0,1 Teilen eines vernetzten, wenig quellbaren Polymerisats auf Basis von NVI und/oder NVP im Stickstoffstrom auf 70°C erhitzt. Bei dieser Temperatur wurde 6 h polymerisiert. Das erhaltene Fällungspolymerisat wurde auf einer Nutsche abgesaugt, mit Wasser gründlich gewaschen und im Umluftschrank bei 60°C getrocknet. Man erhielt ein weißes, körniges Produkt in einer Ausbeute von 96,5 %.

### Beispiel 3

Die Polymerisation wurde gemäß der im Beispiel 2 beschriebenen Vorschrift durchgeführt, jedoch bestand das Monomerengemisch aus 10 Teilen N-Vinylimidazol, 2 Teilen N-Vinylpyrrolidon, 2 Teilen N-Vinylcaprolactam und 0,3 Teilen N,N'-Divinylethylenharnstoff. Die Ausbeute betrug 97 %.

### Beispiel 4

In einem Rührgefäß wurde ein Gemisch aus 5 Teilen N-Vinylpyrolidon, 0,1 Teien N,N'-Divinylethylenharnstoff (DVEH), 50 Teilen H₂O und 0,5 Teilen Natronlauge (5 %ig) vorgelegt und im Stickstoffstrom auf 60°C erwärmt. Nach Zugabe von 0,01 Teilen Natriumdithionit wurde 60 min bei 70°C gerührt. Zu der so erhaltenen Suspension wurde eine Lösung von 10 Teilen N-Vinylimidazol und 0,1 Teilen DVEH in 50 Teilen H₂O innerhalb von 3 h dosiert. Anschließend wurde 2 h bei 70°C nachpolymerisiert. Die Aufarbeitung erfolgte wie in Beispiel 2 beschrieben. Man erhielt ein weißes, feinkörniges Produkt in einer Ausbeute von 95 %.

### Beispiel 5

Die Polymerisation wurde gemäß der im Beispiel 4 beschriebenen Vorschrift durchgeführt, jedoch bestand das Zulaufgemisch aus 14 Teilen N-Vinylimidazol, 0,2 Teilen N,N'-Divinylethylenharnstoff und 28 Teilen Wasser. Die Ausbeute betrug 96 %.

### Beispiel 6

Die Polymerisation wurde gemäß der im Beispiel 4 beschriebenen Vorschrift durchgeführt, jedoch bestand das Zulaufgemisch aus 20 Teilen 4-Vinylpyridin und 0,2 Teilen N,N'-Divinylethylenharnstoff. Um die Suspension rührbar zu halten, wurde nach einer Dosierzeit von 1,5 h mit 30 Teilen Wasser verdünnt. Die Ausbeute betrug 93 %.

### Vergleichsbeispiel

### Mit Radikalbildner hergestelltes vernetztes Polyvinylimidazol

72 Teile N-Vinylimidazol wurden mit 28 Teilen N,N'-Divinylethylenharnstoff und 1,6 Teilen Azodiisobuttersäurenitril in 550 Teilen Wasser gelöst und 4 h auf 80°C erwärmt. Das erhaltene Polymerisat vom Gel-Typ wurde auf einer Nutsche abgesaugt, mit Wasser gewaschen und im Vakuum bei 60°C getrocknet. Man erhielt ein schwach gelbes Polymerisat in nahezu quantitativer Ausbeute.

### Anwendungsbeispiele

Die in den Beispielen angegebenen Einsatzmengen beziehen sich jeweils auf den Festgehalt der Sorptionsmittel.

### Beispiel 7

1 l eines Weins mit einem Eisengehalt von 11,5 ppm und einem pH-Wert von 3,4 wurde jeweils mit 0,5 g der unlöslichen, wenig quellbaren Sorptionsmittel I, II, III und IV versetzt. Es wurde 2 h bzw. 16 h bei Raumtemperatur gerührt. Zur Abtrennung der Sorbentien wurde ein Membranfilter benutzt. Die Bestimmung des Restgehalts an Eisen erfolgte atomemissionsspektroskopisch.
- Sorbens I:: Synthese nach der im Bsp. 1 angegebenen Versuchsvorschrift, Korngröße <250 »m
- Sorbens II:: Synthese nach der im Bsp. 2 angegebenen Versuchsvorschrift, Korngröße <250 »m
- Sorbens III:: Synthese nach der im Bsp. 3 angegebenen Versuchsvorschrift, Korngröße <250 »m
- Sorbens IV:: Synthese nach der im Bsp. 4 angegebenen Versuchsvorschrift, Korngröße <250 »m

| | Einsatzmenge [g/l] | Kontaktzeit [h] | Fe-Gehalt [ppm] | pH-Wert |
|---|---|---|---|---|
| O-Probe | | | 11,5 | 3,4 |
| Sorbens I | 0,5 | 2 | 8,3 | 3,4 |
| Sorbens I | 0,5 | 16 | 3,3 | 3,4 |
| Sorbens II | 0,5 | 2 | 6,1 | 3,4 |
| Sorbens II | 0,5 | 16 | 0,7 | 3,4 |
| Sorbens III | 0,5 | 2 | 7,0 | 3,4 |
| Sorbens III | 0,5 | 16 | 2,4 | 3,4 |
| Sorbens IV | 0,5 | 2 | 5,2 | 3,4 |
| Sorbens IV | 0,5 | 16 | 0,3 | 3,4 |

Der Gehalt an Natrium, Kalium, Magnesium und Calcium veränderte sich nicht.

### Beispiel 8

25 l eines Weins mit einem Eisengehalt von 13,5 ppm, einem Kupfergehalt von 2,0 ppm und einem pH-Wert von 3,5 wurden jeweils mit 12,5 g der Sorptionsmittel II und IV versetzt. Die unlöslichen Sorbentien wurden im Wein innerhalb von 60 h 12x für 30 s aufgerührt. Ihre Abtrennung erfolgte mit Hilfe eines Membranfilters. Die Restgehalte an Eisen und Kupfer wurden atomemissionsspektroskopisch ermittelt.
- Sorbens II:: Synthese nach der im Bsp. 2 angegebenen Versuchsvorschrift, Korngröße < 250 »m
- Sorbens IV:: Synthese nach der im Bsp. 4 angegebenen Versuchsvorschrift, Korngröße < 250 »m

| | Einsatzmenge [g/l] | Kontaktzeit [h] | Fe-Gehalt [ppm] | Cu-Gehalt [ppm] |
|---|---|---|---|---|
| O-Probe | | | 13,5 | 2,0 |
| Sorbens II | 0,5 | 16 | 4,4 | 0,4 |
| Sorbens II | 0,5 | 24 | 2,8 | 0,2 |
| Sorbens II | 0,5 | 60 | 0,3 | < 0,1 |
| Sorbens IV | 0,5 | 16 | 2,9 | 0,1 |
| Sorbens IV | 0,5 | 24 | 1,3 | < 0,1 |
| Sorbens IV | 0,5 | 60 | < 0,1 | < 0,1 |

Der Gehalt an Natrium, Kalium, Magnesium und Calcium veränderte sich nicht. Der pH-Wert blieb konstant.

### Beispiel 9

1 l eines Weins mit einem Kupfergehalt von 10,3 ppm (nach Kupfersulfatschönung) und einem pH-Wert von 3,4 wurde mit 0,15 g des Sorptionsmittels II (Korngröße < 250 »m) versetzt. Das vernetzte, nur wenig quellbare Sorbens wurde im Wein alle 8 Stunden für 30 s aufgerührt. Seine Abtrennung erfolgte mittels eines Membranfilters. Der Restgehalt an Kupfer wurde atomemissionsspektroskopisch ermittelt.

Sorbens II wurde gemäß der im Bsp. 2 angegebenen Vorschrift hergestellt.

| | Einsatzmenge [g/l] | Kontaktzeit [h] | Cu-Gehalt [ppm] | pH-Wert |
|---|---|---|---|---|
| O-Probe | | | 10,3 | 3,4 |
| Sorbens II | 0,15 | 48 | 0,6 | 3,4 |
| Sorbens II | 0,15 | 96 | < 0,1 | 3,4 |

### Beispiel 10

1 l eines Weins aus einem korrodierten Edelstahltank mit einem Eisengehalt von 27,8 ppm, einem Kupfergehalt von 3,3 ppm und einem pH-Wert von 3,3 wurde jeweils mit 0,5 g bzw. mit 1,0 g des Sorptionsmittels V (Korngröße < 250 »m) versetzt. Das unlösliche Sorbens wurde im Wein alle 6 Stunden für 30 s aufgerührt. Seine Abtrennung erfolgte mit Hilfe eines Membranfilters. Die Restgehalte an Eisen und Kupfer wurden atomemissionsspektroskopisch ermittelt.

Sorbens V wurde gemäß der im Bsp. 5 angegebenen Vorschrift hergestellt.

| | Einsatzmenge [g/l] | Kontaktzeit [h] | Fe-Gehalt [ppm] | Cu-Gehalt [ppm] |
|---|---|---|---|---|
| O-Probe | | | 27,8 | 3,3 |
| Sorbens V | 0,5 | 72 | 6,3 | < 0,1 |
| Sorbens V | 1,0 | 72 | 2,1 | < 0,1 |
| Sorbens V | 0,5 | 144 | 1,3 | < 0,1 |
| Sorbens V | 1,0 | 144 | 0,3 | < 0,1 |
| Der pH-Wert blieb konstant. | | | | |

### Beispiel 11

### Vergleichende Untersuchung des Schwermetallsorptionsvermögens verschiedener Chelat- und Austauscherharze im Medium Wein

1 l eines Weins mit einem Eisengehalt von 13,0 ppm, einem Kupfergehalt von 3,0 ppm und einem pH-Wert von 3,4 wurde jeweils mit 0,3 g der verschiedenen Sorptionsmittel versetzt. Es wurde 16 h bei Raumtemperatur gerührt. Zur Abtrennung der Sorbentien wurde ein Membranfilter benutzt. Die Bestimmung des Restgehalts an Eisen erfolgte atomemissionsspektroskopisch.
- Sorbens IV:: Synthese nach der im Bsp. 4 angegebenen Versuchsvorschrift, Korngröße < 250 »m
- Sorbens VI:: Synthese nach der im Bsp. 6 angegebenen Versuchsvorschrift, Korngröße < 250 »m
- Sorbens VII:: Chelite N (Serva), vernetztes, makroporöses Chelatharz mit Amidoximgruppen, Korngröße < 250 »m
- Sorbens VIII:: Chelite P (Serva), poröses Harz, Styrol-Divinylbenzol-Matrix mit Aminoethylphosphonatgruppen, Korngröße < 250 »m
- Sorbens IX:: Amberlite IRA 68 (Rohm & Haas), schwach basischer Anionenaustauscher, vernetzt und hochporös, Korngröße < 250 »m

| | Einsatzmenge [g/l] | Kontaktzeit [h] | Fe-Gehalt [ppm] | Cu-Gehalt [ppm] |
|---|---|---|---|---|
| 0-Probe | | | 13,0 | 3,0 |
| Sorbens IV | 0,3 | 16 | 0,3 | 0,2 |
| Sorbens VI | 0,3 | 16 | 1,7 | 0,7 |
| Sorbens VII | 0,3 | 16 | 8,4 | 2,5 |
| Sorbens VIII | 0,3 | 16 | 5,1 | 2,5 |
| Sorbens IX | 0,3 | 16 | 2,3 | 2,3 |

Das Beispiel zeigt das hervorragende Sorptionsvermögen der erfindungsgemäß verwendbaren Sorptionsmittel IV und VI im Vergleich zu den aufgeführten Chelat- und Austauscherharzen VII bis IX.

### Beispiel 12

1 l eines Weins mit einem Eisengehalt von 12,3 ppm, einem Kupfergehalt von 3,0 ppm und einem pH-Wert von 3,4 wurde jeweils mit 0,25 g der Sorptionsmittel V und X versetzt. Man rührte 2, 4 und 24 h. Die Abtrennung der Sorbentien erfolgte durch Membranfiltration. Die Restgehalte an Eisen und Kupfer wurden atomemissionsspektroskopisch ermittelt.

Sorbens V wurde gemäß der im Beispiel 5 angegebenen Vorschrift mit einem NVI-Anteil im Polymer von ca. 72 % hergestellt. Sorbens X ist ein vernetztes Polymerisat vom Gel-Typ auf Basis von NVI und DVEH, das nach der im Vergleichsbeispiel angegebenen Vorschrift hergestellt wurde. Der NVI-Anteil im Polymer beträgt ebenfalls ca. 72 %. Beide Sorbentien (Korngröße <250 »m) besitzen ein identisches Quellverhalten.

| | Einsatzmenge [g/l] | Kontaktzeit [h] | Fe-Gehalt [ppm] | Cu-Gehalt [ppm] |
|---|---|---|---|---|
| O-Probe | | | 12,3 | 3,0 |
| Sorbens V | 0,25 | 2 | 5,0 | 0,9 |
| Sorbens V | 0,25 | 4 | 2,8 | 0,6 |
| Sorbens V | 0,25 | 24 | 0,2 | 0,1 |
| Sorbens X | 0,25 | 2 | 10,6 | 1,3 |
| Sorbens X | 0,25 | 4 | 9,5 | 1,0 |
| Sorbens X | 0,25 | 24 | 8,9 | 0,8 |

Das Beispiel zeigt das hervorragende Sorptionsvermögen des erfindungsgemäß verwendbaren Sorptionsmittels V im Vergleich zu dem mit Radikalbildner hergestellten Polyvinylimidazol vom Gel-Typ.

## Patentansprüche

1. Verfahren zur Entfernung von Schwermetallionen aus Wein und Weinähnlichen Getränken, dadurch gekennzeichnet, daß man das Getränk pro 100 l mit 5 bis 250 g eines Polymerisates behandelt, das 50 bis 99,5 Gew.-% mindestens eines basischen Vinylheterocyclus mit einem pKₐ-Wert von mindestens 3,8 und 0 bis 49,5 Gew.-% eines anderen copolymerisierbaren Monomeren einpolymerisiert enthält, und das unter Ausschluß von Sauerstoff und von Polymerisationsinitiatoren sowie in Gegenwart von 0,5 bis 10 Gew.-%, bezogen auf die Monomeren, eines Vernetzers hergestellt worden ist.

2. Verfahren nach Anspruch 1, dadurch gekennzeichnet, daß ein Polymerisat eingesetzt wird, das als basischen Vinylheterocyclus N-Vinylimidazol oder 2-Methyl-1-vinylimidazol oder eine Mischung von beiden einpolymerisiert enthält.

3. Verfahren nach Anspruch 1, dadurch gekennzeichnet, daß ein Polymerisat eingesetzt wird, das als basischen Vinylheterocyclus 2-Vinylpyridin, 4-Vinylpyridin oder 2-Methyl-5-vinylpyridin einpolymerisiert enthält.

4. Verfahren nach einem der Ansprüche 1 bis 3, dadurch gekennzeichnet, daß ein Polymerisat eingesetzt wird, das als Comonomer ausschließlich N-Vinylpyrrolidon oder N-Vinylcaprolactam oder eine Mischung von beiden einpolymerisiert enthält.

5. Verfahren nach einem der Ansprüche 1 bis 4, dadurch gekennzeichnet, daß ein Polymerisat eingesetzt wird, das als Vernetzer N,N'-Divinylethylenharnstoff einpolymerisiert enthält.

6. Verfahren nach einem der Ansprüche 1 bis 5, dadurch gekennzeichnet, daß ein Polymerisat eingesetzt wird, das in Gegenwart eines Reduktionsmittels hergestellt worden ist.

7. Verfahren nach einem der Ansprüche 1 bis 6, dadurch gekennzeichnet, daß ein Polymerisat eingesetzt wird, das in Gegenwart von Wasser bei 30 bis 150°C hergestellt worden ist.

8. Verfahren nach einem der Ansprüche 1 bis 7, dadurch gekennzeichnet, daß ein Polymerisat eingesetzt wird, das ohne Lösungsmittel bei 100 bis 200°C hergestellt worden ist.

## Claims

1. A process for removing heavy metal ions from wine and wine-like beverages, which comprises treating each 100 l of the beverage with from 5 to 250 g of a polymer which contains, as copolymerised units, from 50 to 99.5 % by weight of at least one basic vinylheterocycle with a pKₐ of not less than 3.8, and from 0 to 49.5 % by weight of another copolymerizable monomer and which has been prepared with the exclusion of oxygen and of polymerization initiators and in the presence of from 0.5 to 10 % by weight, based on the monomers, of a crosslinker.

2. A process as claimed in claim 1, wherein a polymer which contains as basic vinylheterocycle N-vinylimidazole or 2-methyl-1-vinylimidazole or a mixture of the two is employed.

3. A process as claimed in claim 1, wherein a polymer which contains as basic vinylheterocycle 2-vinylpyridine, 4-vinylpyridine or 2-methyl-5-vinylpyridine is employed.

4. A process as claimed in any of claims 1 to 3, wherein a polymer which contains as comonomer only N-vinylpyrrolidone or N-vinylcaprolactam or a mixture of the two is employed.

5. A process as claimed in any of claims 1 to 4, wherein a polymer which contains as crosslinker N,N'-divinylethyleneurea is employed.

6. A process as claimed in any of claims 1 to 5, wherein a polymer which has been prepared in the presence of a reducing agent is employed.

7. A process as claimed in any of claims 1 to 6, wherein a polymer which has been prepared in the presence of water at from 30 to 150°C is employed.

8. A process as claimed in any of claims 1 to 7, wherein a polymer which has been prepared without solvent at from 100 to 200°C is employed.

## Revendications

1. Procédé d'élimination d'ions de métaux lourds dans le vin et des boissons similaires, caractérisé en ce qu'on traite la boisson par 5 à 250 g, pour 100 l, d'un polymère qui contient en liaison polymère 50 à 99,5% en poids d'au moins un hétérocycle vinylique basique ayant une valeur de pKₐ d'au moins 3,8 et 0 à 49,5% en poids d'un autre monomère copolymérisable, et qui a été préparé à l'abri de l'oxygène, en l'absence d'amorceurs de polymérisation et en présence de 0,5 à 10% en poids, par rapport aux monomères, d'un réticulant.

2. Procédé selon la revendication 1, caractérisé en ce qu'on utilise un polymère qui contient en liaison polymère, en tant qu'hétérocycle vinylique basique, du N-vinylimidazole, du 2-méthyl-1-vinylimidazole ou un mélange des deux.

3. Procédé selon la revendication 1, caractérisé en ce qu'on utilise un polymère qui contient en liaison polymère, en tant qu'hétérocycle vinylique basique, de la 2-vinylpyridine, de la 4-vinylpyridine ou de la 2-méthyl-5-vinylpyridine

4. Procédé selon l'une quelconque des revendications 1 à 3, caractérisé en ce qu'on utilise un polymère qui contient en liaison polymère, en tant que comonomère, exclusivement de la N-vinylpyrrolidone, du N-vinylcaprolactame ou un mélange des deux.

5. Procédé selon l'une quelconque des revendications 1 à 4, caractérisé en ce qu'on utilise un polymère qui contient en liaison polymère, en tant que réticulant, de la N,N'-divinyléthylèneurée.

6. Procédé selon l'une quelconque des revendications 1 à 5, caractérisé en ce qu'on utilise un polymère qui a été préparé en présence d'un agent de réduction.

7. Procédé selon l'une quelconque des revendications 1 à 6, caractérisé en ce qu'on utilise un polymère qui a été préparé en présence d'eau à une température de 30 à 150°C.

8. Procédé selon l'une quelconque des revendications 1 à 7, caractérisé en ce qu'on utilise un polymère qui a été préparé sans solvant à une température de 100 à 200°C.
